# EUROPEAN PATENT SPECIFICATION

(11) **EP 0 753 169 B1**
(45) Date of publication and mention of the grant of the patent: **02.09.1998**
(21) Application number: 95912327.4
(22) Date of filing: 21.03.1995
(51) Int. Cl.: G05B 19/418

(54) **MANUFACTURING INSTALLATION AND PROCESSING OPERATIONS**
PRODUKTIONSEINRICHTUNG UND VERARBEITUNGSBETRIEB
INSTALLATION DE PRODUCTION ET OPERATIONS CONCERNANT DIFFERENTS TRAITEMENTS

(30) Priority: 28.03.1994 GB 9406104
(43) Date of publication of application: 15.01.1997
(73) Proprietor: HECKETT MULTISERV PLC, London SW1Y 4NB (GB)
(72) Inventor: EVANS, Darrel, Richmond Surrey TW9 2EA (GB); SCHULIGER, Brian, Eugene, Pittsburgh, PA 15238-2905 (US)
(74) Representative: Shaw, Laurence
(86) International application number: GB9500640
(87) International publication number: WO9526522

(56) References cited:
- EP-A- 0 428 160
- WO-A-91/10202
- FR-A- 2 544 888
- GB-A- 1 377 966
- US-A- 4 956 777
- PATENT ABSTRACTS OF JAPAN vol. 17 no. 642 (E-1466) ,29 November 1993 & JP,A,52 007018 (OKI ELECTRIC)
- PATENT ABSTRACTS OF JAPAN vol. 10 no. 74 (P-439) ,25 March 1986 & JP,A,60 214009 (NAMUKO)

## Description

The invention relates to the tracking of batches of articles undergoing successive processing steps in an overall manufacturing process at a manufacturing installation. While the invention is capable of use in a wide variety of contexts, it is seen to good use in the tracking of steel slabs, blooms, billets and the like between the caster and successive rolling mills of a steel mill. For convenience, these pieces will be called by the single word "slabs" herein.

Following the casting of a batch of slabs of steel, metal or other alloy, it is imperative that the steel maker knows exactly what each slab is: what alloying elements it contains; when it was cast; its position within the steel mill, the intended end use or customer; and the like. This information is required for every slab produced and therefore each slab is allocated an identity, usually in the form of a number. The steel maker may want to carry out a number of operations on certain slabs between the caster and the rolling mill. e.g. subdivide or slit them, diffuse hydrogen out of the slab, quality test them, send them straight for export or stock them etc. Therefore each slab must be tracked and the identity must be maintained so as not to lose them or confuse them with other slabs. Due to the high volume of production and the short lead times for steel slabs, a paper record system of logging the position of each slab is not sufficient to allow effective control of the mill.

It is one object of the invention to provide a manufacturing installation such as a steel mill adapted to track articles, e.g. to the exact physical location of all slabs in the mill in real time providing instant information regarding any slab at any time.

US 4,642,017 discloses an automated storage retrieval system for use at a pipe manufacturing facility wherein containers for the pipes are provided with transponders which are interrogated by transmitter/receiver arrangements located on cranes which transport the containers containing the pipes. The results of the interrogation are stored in a computer which also monitors the loading and unloading operations of the cranes and monitors and controls the positions of the cranes on a gantry. Such an arrangement requires that identifiable containers are required for the batches of articles to be moved. Furthermore the identities of the batches of articles are not stored.

Further background prior art is disclosed in GB -A-1377966, US-A-4956777, JP-A-52/007018, EP-A-428160, JP-A-60/214009, GB-A-2143395, GB-A-1278929 and GB-A-1070176.

WO91/10202 (Asyst Technologies Inc.) discloses a manufacturing installation comprising a plurality of processing stations each arranged to perform a processing step on a batch of articles to be manufactured, the installation also having storage stations made up of storage regions, and a steerable vehicle for moving the batches between the processing stations and the storage regions, the installation having a CPU provided with a database and arranged to track the moving of the batches by the vehicle, the installation having identifying code means and reading means arranged to read the identifying code means, the reading means and identifying code means being coupled to the CPU and arranged to automatically update the CPU with the positions of the batches.

In one aspect the invention provides a manufacturing installation as outlined **characterised in that** the identifying code means are associated with, and identify, individual processing stations and the storage regions and in that the reading means is carried by the vehicle, whereby in use, the positions of the batches in the installation are updated by monitoring the movements of the vehicle.

WO 91/10202 also discloses a method of tracking batches of articles in a manufacturing installation, the articles being subjected to a succession of processing steps at different processing stations in the installation and being moved by a steerable vehicle between processing stations and to and from storage regions between processing, the method comprising storing the positions of the batches of articles and updating the stored positions of the batches of articles as they are moved by the vehicle.

In another aspect the invention provides a method as outlined **characterised by** storing the identities of the articles by their positions in the installation, assigning an identifying code to each storage region (SR) and processing station (PS), reading the identifying codes by code-reading means (R) carried on the vehicle (V) and identifying each batch (B) to be moved by the identifying code of its location and that of its destination.

It will be noted in the systems of WO 91/10202 and of US 4,642,017 containers for the articles to be transported are required, together with active devices incorporated in them for identification purposes. In the present invention, this requirement (which is expensive and inconvenient and makes the installation vulnerable to damage to the devices incorporated in the containers) is avoided by storing the identities of the articles by their positions in the installation. Given that their initial positions are known, the positions of all the articles can be monitored by tracking the movements of the batches on the vehicle.

The reading means may be self-powered or may be powered in response to interrogation of the code means. Preferably the code reading means associated with the vehicle is arranged to transmit a radio signal to read the code means. The code reading means may be arranged to activate a transponder associated with the code means. Preferably the transponders are set below the ground level of the processing station or storage region.

The code may take a wide variety of forms and may comprise bits, say up to 32 bits of information, typically numerals.

Further preferred features are defined in the dependent claims.

In a preferred feature. the installation includes a CPU having a database which stores the identities of all the slabs by their positions in and around the steel mill or other manufacturing installation. It preferably has an input faculty for updating and modifying data and can provide output to produce reports and to monitor progress. (It preferably also has a security system to allow access only to those who require it). This package can be integrated with the caster and rolling mill computers so that the database can receive instructions and confirm execution automatically, without human input.

Preferably, the code reading means includes an antenna, a radio frequency reader and a radio frequency modulator. and the code means comprises a transponder whereby the radio frequency reader emits a signal via the antenna which activates the transponder, which in turn emits a radio signal unique to a particular position within the facility. A transponder is preferably located next to each slab pile area to provide a means to identify that pile. Transponders may also be installed on the roads and at different areas in the stockyard to enable tracking and define regions within the stockyard. The transponders may be installed underground to prevent damage by vehicles or slabs.

Preferably the vehicles are robust, highly flexible rubber tyred machines which are not constrained by tracks such as overhead cranes, electric cables or railway. Each vehicle preferably carries a computer interface, an antenna, a radio frequency reader and a radio frequency modulator. The computer interface may communicate with the CPU holding the data base via a radio link or the like.

In operation of a preferred embodiment the CPU will receive instructions from e.g. a casting computer by radio waves which are received by a radio frequency reader. The instructions will specify which slabs should be collected by a vehicle and where they are to be taken for storage or subsequent processing. The CPU will calculate the optimum storage site or position for these slabs, storing the information in the appropriate database. The CPU will transmit a radio signal to the computer interface of one vehicle to inform the operator that the slabs should be taken to the calculated optimum storage site. The radio signal will be received by the antenna on the vehicle, then modulated by the radio frequency modulator to be displayed on the computer interface. When the vehicle passes over the first slab pile transponder upon collecting the slabs, the radio frequency reader on the vehicle will emit a radio signal via the antenna to the transponder which will emit a further radio signal unique to its position within the factory. The signal will be modulated by the radio frequency modulator and a comparison of the two signals will be made to verify that the pile is correct. The verification will be displayed by the computer interface within the vehicle. If the two radio signals do not coincide, the computer interface will display that an error has been made, and will automatically update the CPU so that although an incorrect pile has been picked up, the positions of the slabs in either pile are still known. It is possible to override this or any automatic feature of the CPU and this would be flagged in a report printed at the end of every shift.

In the preferred embodiment the vehicle driver then takes the slabs to the assigned station. When the vehicle passes over the transponder for that station. the radio frequency reader emits a radio signal via the antenna to the transponder. which will emit a further signal corresponding to its position within the factory. Confirmation that this is the correct position will be displayed on the computer interface, and if it is not the correct position the operator will be informed and the CPU updated automatically. In this way every slab may be tracked no matter what an operator does. The electronic verification by the transponders maintains the integrity of the system whilst the immediate updating ensures that the CPU can be interrogated at any time for information concerning a given slab.

The invention has the following additional advantages in the particular context of a steelyard:
- reducing steel mill inventory. With total slab tracking no slabs will be lost which in turn leads to more efficient casting because many times an entire cast has to be made again even if only one slab is lost:
- reducing vehicle movements. This will reduce lead times as slabs are placed in the nearest available position to their next process. This will also increase vehicle efficiency as the CPU identifies and recommends the batch closest to the vehicle as the next batch of articles to transport. This will also reduce the risk of human error, from either caster, rolling mill or other employees.
- reducing human input and thus the potential for human error. By electronically verifying the position and identity of slabs these can be automatically updated without any human involvement.

In order that the invention may be well understood a preferred embodiment will now be described with reference to the accompanying diagrammatic drawings in which:

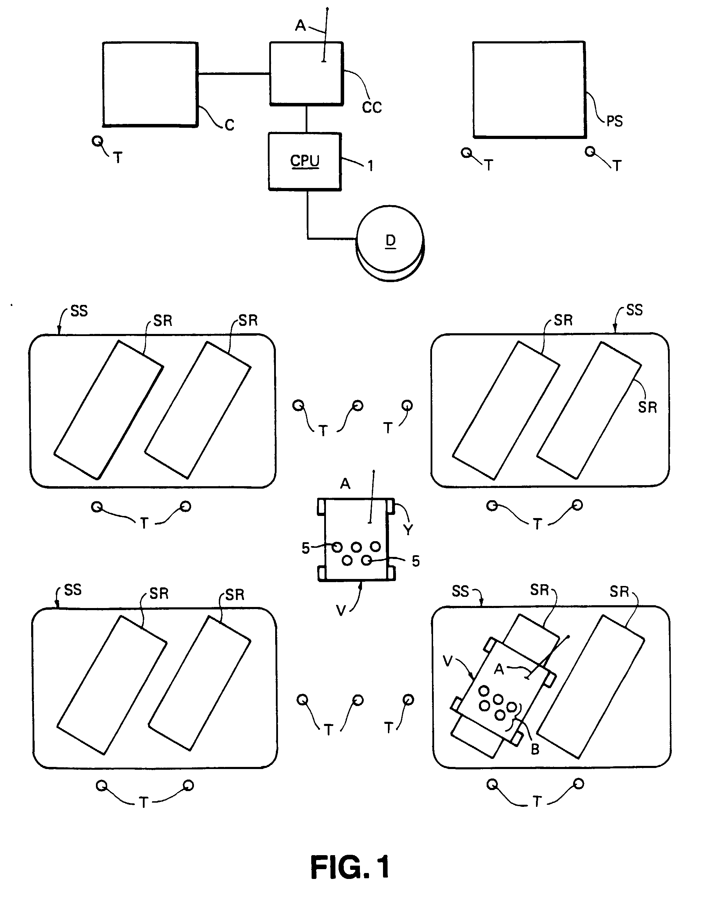

Figure 1 is a schematic drawing of a steelworks; and
Figure 2 is a schematic drawing of the radio signalling means

In the drawing a casting mould C is arranged to cast a batch B of steel slabs 5 which will require processing at a subsequent processing station PS. (The processing steps may be rolling as in a rolling mill, scarfing, cutting, heat treatment or the like.) Because of the way in which work is handled at a steel mill it is necessary to store batches B of slabs 5 between operations and this is done in one or more storage stations SS which are divided up into storage regions SR which are parking lots for one or more vehicles V. According to the invention one or more transponders T are set into the ground adjacent one edge of each parking lot. Each transponder provides an individual transmission signal, i.e. a code. Transponders are also present at each station, e.g inset into the floor adjacent a rolling mill.

The batches of slabs are moved about the steelworks on a suitable vehicle V. This is provided with a radio frequency reader 2 arranged to communicate with the transponders via an antenna A. The cab of the vehicle also includes a computer interface 3 which is in communication, e.g. by radio signals with a CPU 1 associated with the caster computer CC and rolling mill computers (not shown).

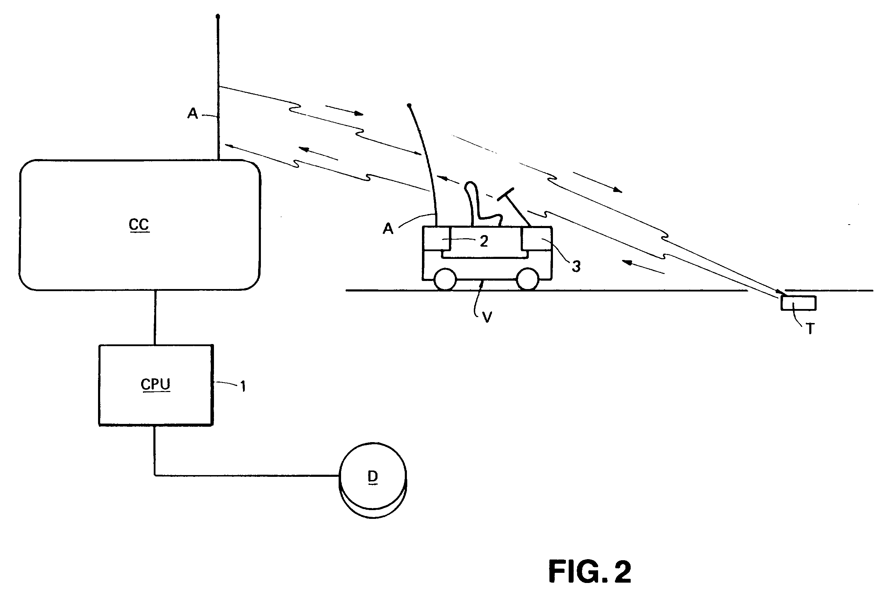

In operation, as shown in Figure 2, a radio signal is transmitted from the antenna A associated with CPU 1 to a radio transmitter/receiver 2 coupled to a computer interface 3 of a vehicle V, setting out the code number of the location at which slabs are to be picked up and the corresponding slab identities and the code number of the destination station. For example a batch may need to be moved from a storage area to a processing station. The vehicle then travels to the storage area and on arrival the radio frequency reader sends a radio signal via the antenna A to verify the code of the respective transponder. If the transponder code corresponds to the assigned code the operator lifts the slabs and transports them to the destination station. He checks the code of that before depositing the load. He can check his route using the transponders along the roadways and can identify his location in transit to a central control on request.

CPU 1 maintains a database on a hard drive D which stores the position of all the slabs 5.

The invention is not limited to the embodiment shown. The signal transmission need not be by radio waves but could be by optical, laser inductive coupling, or the like.

Also the CPU which maintains the database need not be linked to the casting computer CC but may communicate independently with the vehicle V. The database may be maintained by the computer 3 of the vehicle or by the computers of all vehicles in order to provide a multiple backup.

The invention is applicable not only to articles which are identical within each batch but also to batches each comprising a number of different articles. in which case the identities of individual articles can be stored by preserving the relative positions and /or orientations of the articles within each batch as the batch is moved.

## Claims

1. A manufacturing installation comprising a plurality of processing stations (PS) each arranged to perform a processing step on a batch (B) of articles to be manufactured, the installation also having storage stations (SS) made up of storage regions (SR), and a steerable vehicle (V) for moving the batches between the processing stations (PS) and the storage regions (SR), the installation having a CPU provided with a database and arranged to track the moving of the batches by the vehicle, the installation having identifying code means (T) and reading means (R) arranged to read the identifying code means, the reading means and identifying code means being coupled to the CPU and arranged to automatically update the CPU with the positions of the batches, **characterised in that** the identifying code means (T) are associated with, and identify, individual processing stations (PS) and the storage regions (SR) and in that the reading means (R) is carried by the vehicle (V), whereby in use, the positions of the batches (B) in the installation are updated by monitoring the movements of the vehicle (V).

2. A manufacturing installation according to Claim 1, wherein the processing stations (PS) and/or the storage regions (SR) are provided with transponders (T) and the reading means (R) on the vehicle (V) is arranged to interrogate the transponders and so determine the identifying codes of the processing stations and/or storage regions.

3. A manufacturing installation according to Claim 2, wherein the reading means (R) is arranged to interrogate the transponders (T) by radio signals.

4. A manufacturing installation according to any preceding Claim, wherein the articles do not themselves carry any identifying code means capable of being read by the reading means (R)

5. A manufacturing installation according to any preceding Claim, wherein the vehicle (V) is manually steerable.

6. A manufacturing installation according to Claim 5, wherein the CPU is arranged to be updated automatically in response to an operator picking up a batch (B) from a wrong storage region (SR).

7. A manufacturing installation according to any preceding Claim, which is a metal handling or processing installation, wherein the articles are metal stock items and/or semi-manufactured metal articles and/or finished metal articles.

8. A manufacturing installation according to Claim 7, which is a steelworks.

9. A manufacturing installation according to Claim 8, wherein a casting computer (CC) is arranged to generate and transmit to the CPU instructions concerning movement of the batches (B) of the articles.

10. A manufacturing installation according to any preceding Claim, wherein the CPU is arranged to track individual items within each batch (B) and record their positions in the database.

11. A method of tracking batches (B) of articles in a manufacturing installation, the articles being subjected to a succession of processing steps at different, processing stations (PS) in the installation and being moved by a steerable vehicle (V) between processing stations and to and from storage regions (SR) between processing, the method comprising storing the positions of the batches of articles and updating the stored positions of the batches of articles as they are moved by the vehicle, **characterised by** storing the identities of the articles by their positions in the installation, assigning an identifying code to each storage region (SR) and processing station (PS), reading the identifying codes by code-reading means (R) carried on the vehicle (V) and identifying each batch (B) to be moved by the identifying code of its location and that of its destination.

12. A method as claimed in Claim 11, including using the code reading means (R) to confirm the present location code and the code of the destination station before removing the batch (B), and to confirm the code of the destination station before removing the batch (B) and to confirm the code of the destination station before depositing the transported batch.

13. A method as claimed in Claim 12, wherein the manufacturing installation is as claimed in any of Claims 1 to 11.

## Patentansprüche

1. Fertigungsanlage mit mehreren Verarbeitungsstationen (PS), die jeweils ausgelegt sind, einen Verarbeitungsschritt an einer Charge (B) von herzustellenden Gegenständen durchzuführen, wobei die Anlage außerdem Speicherstationen (SS) aufweist, die aus Speicherbereichen (SR) bestehen, und ein lenkbares Fahrzeug (V) zum Bewegen der Chargen zwischen den Verarbeitungsstationen (PS) und den Speicherbereichen (SR), wobei die Anlage eine CPU aufweist, die mit einer Datenbasis versehen und ausgelegt ist, die Bewegung der Chargen durch das Fahrzeug nachzusteuern, wobei die Anlage eine Identifizierungs-Code-Einrichtungen (T) und Leseeinrichtung (R) aufweist, die dazu ausgelegt sind, die Identifizierungs-Code-Einrichtung zu lesen, wobei die Leseeinrichtung und die Identifizierungs-Code-Einrichtungen mit der CPU verbunden und dazu ausgelegt sind, die CPU automatisch mit den Positionen der Chargen zu aktualisieren, dadurch gekennzeichnet, daß die Identifizierungs-Code-Einrichtungen (T) einzelnen Verarbeitungsstationen (PS) und den Speicherbereichen (SR) zugeordnet sind und diese identifizieren, und daß die Leseeinrichtung (R) durch das Fahrzeug (V) getragen ist, wodurch im Gebrauch die Positionen der Chargen (B) in der Anlage durch Überwachen der Bewegungen des Fahrzeugs (V) aktualisiert werden.

2. Herstellungsanlage nach Anspruch 1, wobei die Verarbeitungsstationen (PS) und/oder die Speicherbereiche (SR) mit Transpondern (T) versehen sind, und die Leseeinrichtung (R) auf dem Fahrzeug (V) dazu ausgelegt ist, die Transponder abzufragen und dadurch die Identifizierungs-Codes der Verarbeitungsstationen und/oder Speicherbereiche zu ermitteln.

3. Herstellungsanlage nach Anspruch 2, wobei die Leseeinrichtung (R) dazu ausgelegt ist, die Transponder (T) durch Funksignale abzufragen.

4. Herstellungsanlage nach einem der vorangehenden Ansprüche, wobei die Gegenstände selbst keinerlei Identifizierungs-Code-Einrichtung tragen, die durch die Leseeinrichtung (R) gelesen werden kann.

5. Herstellungsanlage nach einem der vorangehenden Ansprüche, wobei das Fahrzeug (V) manuell lenkbar ist.

6. Herstellungsanlage nach Anspruch 5, wobei die CPU dazu ausgelegt ist, ansprechend auf eine Bedienperson automatisch aktualisiert zu werden, die eine Charge (B) von einem falschen Speicherbereich (SR) aufnimmt.

7. Herstellungsanlage nach einem der vorangehenden Ansprüche, wobei es sich bei dieser Anlage um eine Metallhandhabungs- oder -verarbeitungsanlage handelt, wobei es sich bei den Gegenständen um Metallteile und/oder halbfertige Metallgegenstände und/oder fertiggestellte Metallgegenstände handelt.

8. Herstellungsanlage nach Anspruch 7, wobei es sich bei der Anlage um ein Stahlwerk handelt.

9. Herstellungsanlage nach Anspruch 8, wobei ein Gießcomputer (CC) dazu ausgelegt ist, für die CPU Instruktionen betreffend die Bewegungen der Chargen (B) von Gegenständen zu erzeugen und zu dieser zu übertragen.

10. Herstellungsanlage nach einem der vorangehenden Ansprüche, wobei die CPU dazu ausgelegt ist, einzelne Gegenstände innerhalb einer Charge (B) nachzusteuern und ihre Positionen in der Datenbasis aufzuzeichnen.

11. Verfahren zum Nachsteuern von Chargen (B) von Gegenständen in einer Herstellungsanlage, wobei die Gegenstände eine Aufeinanderfolge von Verarbeitungsschritten in unterschiedlichen Verarbeitungsstationen (PS) in der Anlage unterworfen und durch ein lenkbares Fahrzeug (V) zwischen Verarbeitungsstationen sowie zu Speicherbereichen (SR) zwischen den Verarbeitungsstationen sowie von diesen weg bewegt werden, wobei das Verfahren das Speichern der Positionen der Chargen von Gegenständen und Aktualisieren der gespeicherten Positionen der Chargen von Gegenständen umfaßt, wenn sie durch das Fahrzeug bewegt werden, gekennzeichnet durch Speichern der Identitäten der Gegenstände durch ihre Positionen in der Anlage, Zuordnen eines Identifizierungs-Codes zu jedem Speicherbereich (SR) und jeder Verarbeitungsstation (PS), Lesen der Identifizierungs-Codes durch eine Code-Leseeinrichtung (R), die auf dem Fahrzeug (V) getragen ist, und Identifizieren jeder zu bewegenden Charge (B) durch den Identifizierungs-Code betreffend seines Standorts und seines Bestimmungsorts.

12. Verfahren nach Anspruch 11, aufweisend das Verwenden der Code-Leseeinrichtung (R) zum Bestätigen des aktuellen Standort-Codes und des Codes der Bestimmungsstation, bevor die Charge (B) wegbewegt wird, und zum Bestätigen des Codes der Bestimmungsstation, bevor die Charge (B) wegbewegt wird, und zum Bestätigen des Codes der Bestimmungsstation, bevor die transportierte Charge abgesetzt wird.

13. Verfahren nach Anspruch 12, wobei es sich bei der Herstellungsanlage um diejenige handelt, die in einem der Ansprüche 1 bis 11 beansprucht ist.

## Revendications

1. Installation pour la fabrication comprenant une pluralité de postes de traitement (PS) agencés chacun afin de réaliser une étape de traitement sur un lot (B) d'articles à fabriquer, l'installation ayant également des postes de stockage (SS) composés de zones de stockage (SR), et un véhicule dirigeable (V) pour déplacer les lots entre les postes de traitement (PS) et les zones de stockage (SR), l'installation ayant une unité centrale munie d'une base de données et agencée pour suivre le déplacement des lots transportés par le véhicule, l'installation ayant des moyens de code d'identification (T) et des moyens de lecture (R) agencés pour lire les moyens de code d'identification, les moyens de lecture et les moyens de code d'identification étant couplés à l'unité centrale et agencés pour mettre à jour l'unité centrale avec les positions des lots, caractérisée en ce que les moyens de code d'identification (T) sont associés avec, et identifient les postes de traitement (PS) individuels et les zones de stockage (SR) et en ce que les moyens de lecture (R) sont supportés par le véhicule (V), moyennant quoi, en utilisation, les positions des lots (B) dans l'installation sont mises à jour par surveillance des mouvements du véhicule (V).

2. Installation pour la fabrication selon la revendication 1, dans laquelle les postes de traitement (PS) et/ou les zones de stockage (SR) sont munies de répondeurs d'identification (T) et les moyens de lecture (R) montés sur le véhicule (V) sont agencés pour interroger les répondeurs d'identification et ainsi déterminer les codes d'identification des postes de traitement et/ou des zones de stockage.

3. Installation pour la fabrication selon la revendication 2, dans laquelle les moyens de lecture (R) sont agencés pour interroger les répondeurs d'identification (T) au moyen de signaux radio.

4. Installation pour la fabrication selon l'une quelconque des revendications précédentes, dans laquelle les articles ne portent pas eux-mêmes de moyens de code d'identification pouvant être lus par les moyens de lecture (R).

5. Installation pour la fabrication selon l'une quelconque des revendications précédentes, dans laquelle le véhicule (V) peut être dirigé manuellement.

6. Installation pour la fabrication selon la revendication 5, dans laquelle l'unité centrale est agencée pour être mise à jour automatiquement en réponse à un opérateur ramassant un lot (B) provenant d'une mauvaise zone de stockage (SR).

7. Installation pour la fabrication selon l'une quelconque des revendications précédentes, qui est une installation métallique de manutention ou de traitement, dans laquelle les articles sont des articles bruts métalliques et/ou des articles métalliques semi-finis et/ou des articles métalliques finis.

8. Installation pour la fabrication selon la revendication 7, qui est une aciérie.

9. Installation pour la fabrication selon la revendication 8, dans laquelle un ordinateur à animation par successions d'images (CC) est agencé pour générer et transmettre à l'unité centrale des instructions concernant le mouvement des lots (B) des articles.

10. Installation pour la fabrication selon l'une quelconque des revendications précédentes, dans laquelle l'unité centrale est agencée pour suivre les articles individuellement à l'intérieur de chaque lot (B) et enregistrer leur position dans la base de données.

11. Procédé de suivi des lots (B) d'articles dans une installation pour la fabrication, les articles étant soumis à une succession d'étapes de traitement à différents postes de traitement (PS) dans l'installation et étant déplacés par un véhicule dirigeable (V) entre lesdits postes de traitement, vers et depuis les zones de stockage (SR) entre les postes de traitement, le procédé comprenant le stockage et la mise à jour des positions des lots d'articles lorsqu'ils sont déplacés par le véhicule, caractérisé par le stockage des identités des articles par leur position dans l'installation, l'attribution d'un code d'identification à chaque zone de stockage (SR) et chaque poste de traitement (PS), la lecture des codes d'identification par des moyens de lecture de codes (R) supportés par le véhicule (V) et l'identification de chaque lot (B) à déplacer par le code d'identification de son emplacement et celle de sa destination.

12. Procédé selon la revendication 11, comprenant l'utilisation des moyens de lecture de code (R) pour confirmer le présent code de situation et le code du poste de destination avant de déplacer le lot (B) et confirmer le code du poste de destination avant de retirer le lot (B) et de confirmer le code du poste de destination avant de déposer le lot transporté.

13. Procédé selon la revendication 12, dans lequel l'installation pour la fabrication est telle que présentée dans l'une quelconque des revendications 1 à 11.
